(19)

Europäisches Patentamt
European Patent Office
Office européen des brevets

(11) **EP 3 847 529 B1**

(12) ## EUROPEAN PATENT SPECIFICATION

(45) Date of publication and mention
of the grant of the patent:
**11.06.2025 Bulletin 2025/24**

(21) Application number: **19769198.3**

(22) Date of filing: **09.09.2019**

(51) International Patent Classification (IPC):
*G06F 3/01* (2006.01)

(52) Cooperative Patent Classification (CPC):
**G06F 3/016**

(86) International application number:
**PCT/GB2019/052510**

(87) International publication number:
**WO 2020/049322 (12.03.2020 Gazette 2020/11)**

(54) **EVENT TRIGGERING IN PHASED-ARRAY SYSTEMS**

EREIGNISAUSLÖSUNG IN PHASED-ARRAY-SYSTEMEN

DÉCLENCHEMENT D'ÉVÉNEMENT DANS LES SYSTÈMES MULTI-ÉLEMENTS COMMANDÉS EN PHASE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.09.2018 US 201862728830 P**

(43) Date of publication of application:
**14.07.2021 Bulletin 2021/28**

(73) Proprietor: **Ultrahaptics IP Limited**
**Bristol BS2 0EL (GB)**

(72) Inventors:
• **KAPPUS, Brian**
**Mountain View, California 94043 (US)**
• **LONG, Benjamin John Oliver**
**Bristol BS4 3AS (GB)**

(74) Representative: **Latham, Stuart Alexander**
**Withers & Rogers LLP**
**2 London Bridge**
**London SE1 9RA (GB)**

(56) References cited:
**WO-A1-2016/007920       WO-A1-2017/172006**
**US-A1- 2018 139 557**

• **KAPPUS BRIAN ET AL: "SPATIOTEMPORAL MODULATION FOR MID-AIR HAPTIC FEEDBACK FROM AN ULTRASONIC PHASED ARRAY", 25TH INTERNATIONAL CONGRESS ON SOUND AND VIBRATION 2018 (ICSV 25) : HIROSHIMA CALLING : HIROSHIMA, JAPAN, 8-12 JULY 2018,, vol. 3, 1 January 2018 (2018-01-01), pages 1669 - 1675, XP009543809, ISBN: 978-1-5108-6845-8**
• **DUERINCKX ET AL: "Matched gaussian apodization of pulsed acoustic phased arrays", ULTRASONIC IMAGING, DYNAMEDIA INC., SILVER SPRING, MD, US, vol. 2, no. 4, 1 October 1980 (1980-10-01), pages 338 - 369, XP023046301, ISSN: 0161-7346, [retrieved on 19801001], DOI: 10.1016/0161-7346(80)90036-X**
• **KAPPUS BRIAN ET AL: "SPATIOTEMPORAL MODULATION FOR MID-AIR HAPTIC FEEDBACK FROM AN ULTRASONIC PHASED ARRAY", 25TH INTERNATIONAL CONGRESS ON SOUND AND VIBRATION 2018 (ICSV 25) : HIROSHIMA CALLING : HIROSHIMA, JAPAN, 8-12 JULY 2018,, vol. 3, 1 January 2018 (2018-01-01), pages 1669 - 1675, XP009543809, ISBN: 978-1-5108-6845-8**
• **DUERINCKX ET AL: "Matched gaussian apodization of pulsed acoustic phased arrays", ULTRASONIC IMAGING, DYNAMEDIA INC., SILVER SPRING, MD, US, vol. 2, no. 4, 1 October 1980 (1980-10-01), pages 338 - 369, XP023046301, ISSN: 0161-7346, [retrieved on 19801001], DOI: 10.1016/0161-7346(80)90036-X**

EP 3 847 529 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

• TAKAYUKI HOSHI ET AL: "Noncontact Tactile Display Based on Radiation Pressure of Airborne Ultrasound", IEEE TRANSACTIONS ON HAPTICS, vol. 3, no. 3, 1 July 2010 (2010-07-01), USA, pages 155 - 165, XP055563445, ISSN: 1939-1412, DOI: 10.1109/TOH.2010.4

# EP 3 847 529 B1

**Description**

RELATED APPLICATION

This application claims the benefit of the following U.S. Provisional Patent Application:
1) Serial No. 62/728,830, filed on September 9, 2018.

FIELD OF THE DISCLOSURE

The present disclosure relates generally to improved techniques for using timing techniques to improve performance of phased-array systems.

BACKGROUND

A continuous distribution of sound energy, which will be referred to as an "acoustic field", can be used for a range of applications including parametric audio, haptic feedback in mid-air and the levitation of objects.
By defining one or more control points in space, the acoustic field can be controlled. Each point can be assigned a value equating to a desired amplitude at the control point. A physical set of transducers can then be controlled as a phased-array system to create an acoustic field exhibiting the desired amplitude at the control points.
To create specific dynamic acoustic fields, information about timing is important, as different transducers must be supplied waves that are precisely synchronized in time. If the field is to be dynamically controlled in a way that deviates from the traditional approach of assuming a static field for all time, then the device must be aware of the time of flight necessary to effect a change in the field such that waves from each transducer reach the same point at the same time. This allows the device to create near-instantaneous changes (within a few periods of the carrier frequency) in the field. However, the computational requirements of driving the array calculations at a speed necessary to respond quickly enough to include near-instantaneous effects is prohibitive. If there were a way to include these effects without the computational cost, then this would be commercially valuable.
Further, for many applications, including parametric audio and haptic feedback in mid-air, it is necessary to modulate the acoustic field at the control points through time. This is achieved by modulating the values assigned to each point, changing these to produce one or more waveforms at the given control points. Without loss of generality, techniques demonstrated on a monochromatic field may be extended to these fields that contain time-dependent modulated signal waveforms.
By modulating these with waveforms including components in the ranges of frequencies (0-500Hz) that may be perceived by the skin, haptic feedback may be created. These points of haptic feedback are the control points, which are created by controlling a substantially monochromatic ultrasonic acoustic field to generate this known excitation waveform at a point in space. When an appropriate body part intersects this point in the air, the acoustic field is demodulated into either a haptic sensation experienced by the skin or an audible sound that may be experienced.
Tracking systems are required to determine the location and orientation of body parts to determine where to place the control points to best elicit the haptic or audio desired. These tracking systems may be poorly calibrated or insufficiently precise, creating potentially large sources of error in the locations of the creation of these points.
Kappus Brian et al: "Spatiotemporal Modulation for Mid-Air Haptic Feedback from an Ultrasonic Phased Array", 25th International Congress on Sound and Vibration 2018 (ICSV 25), pages 1669-1675 ISBN: 978-1-5108-6845-8 describes a method of spatiotemporal modulation for mid-air haptic feedback using an ultrasonic phased array.

SUMMARY

An aspect of the invention is set out in the appended claims. One method to create near-instantaneous effects as described above is to split the update process of the array state into parts that depend on different update rates. Alternatively, leveraging the physical properties of the focusing system may improve the intersection between the body part and the control point in the presence of uncertainty in the tracking system. Specifically, by focusing behind or in front of the intended region or at a position with a calculated geometric relationship to the intended interaction region, a larger volume (region) of space is addressed which more certainly contains the body part participating in the interaction. This larger volume is then subjected to the ultrasonic radiative energy flux which encodes the properties desired for the interaction point, which may include haptic and/or audio points.

BRIEF DESCRIPTION OF THE DRAWINGS

The accompanying figures, where like reference numerals refer to identical or functionally similar elements throughout the separate views, together with the detailed description below, are incorporated in and form part of the specification, serve to further illustrate embodiments of concepts that include the claimed invention and explain various principles and advantages of those embodiments.

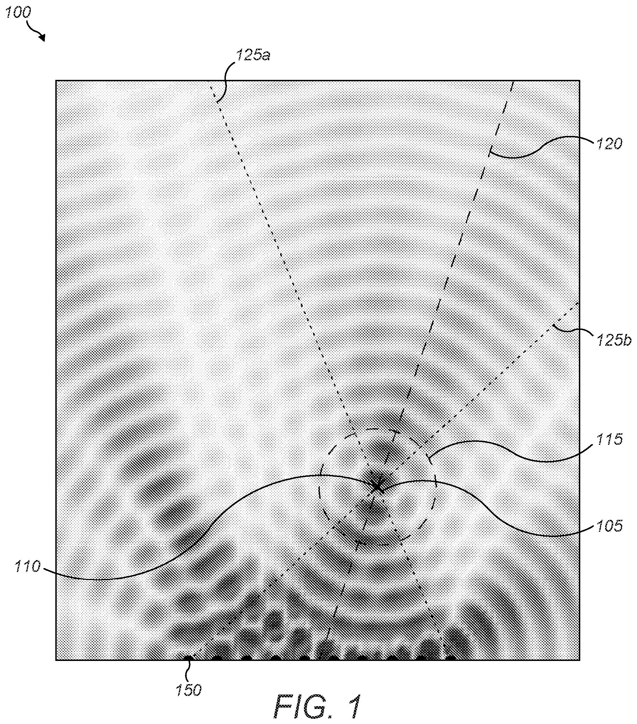

Figures 1, 2, 3, 4, 5 and 6 are exemplary wave radiation schematics generated by a plurality of transducers.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

DETAILED DESCRIPTION

I. ADDING TIMED TRIGGERS

A way to create near-instantaneous effects as described above, is to split the update process of the array state into parts that depend on different update rates. Using this approach, the slow updates that contain individual transducer or array state data that occupy the array for a given period of time are updated through one channel, but discrete 'triggering' commands or events that occur or are applied instantly are updated through another. These triggering commands may be time-stamped with the time at which they are intended to be applied and priority queued on the device in a location specifically to quickly determine the next command and apply it. If they refer to a process that occurs in the acoustic field, they may also be applied in a staggered fashion to each transducer so that the effects generated by the command reach the control point simultaneously at the instant in time specified in the time-stamp. Given that these commands are time-stamped, they may be sent to multiple devices in turn and these devices may be guaranteed to wait the appropriate amount of time before triggering the effect. Examples of such commands include but are not limited to: instantaneous change of the transducer driving signal to some preloaded state, powering the device off or down, inducing a specified phase shift at the control point, triggering an external device by driving an edge on an output pin, triggering the generation of instantaneous debugging information or responding to invalid input.

Additionally, the timing of the triggers for these commands may be offset by the time of flight required for the waves to travel and reach the point where the desired effect is to be created. Especially in the context of haptics and parametric audio, this enables the timestamp of these timed commands to be coincident with the onset of a sensory cue. Optionally, this yields synchronization of the cue to the user with an external device. Alternatively, this offset may be used ahead of time, allowing a change in the device to be specified with a known timestamp such that it is guaranteed for the waves to reach a target point at this known time. This may elicit a synchronized sensory experience linked to an external event.

In the inverse case, the device may use time stamping to signify that events have occurred. Examples of such events that could trigger include but are not limited to: microphones recording a test signal, component failure or obtaining some processed information through microphones or other input.

II. OPTICAL LENS MODELING AND ANALYSIS

The areas filled with acoustic radiation energy when the transducer array is focused can be visualized analogously to an optical lens. The array when operating is an 'aperture' which is synthesized from the contributions from each of the transducers, this is projected through the focus when the phased array system is actively focusing. Intuitively and roughly speaking therefore, at twice the focusing distance the energy flux that was focused is now spread over an area equivalent to the array size.

The concentration and subsequent rarefaction of the energy flux along the focusing path may be leveraged to provide a larger volume for the energy to flow through. Choosing a different part of the beam to use away from the focus is effectively equivalent to a larger focal spot. These regions of high energy are effectively also phase-coherent, preventing ringing due to phase inversions that could cause inconsistencies.

The direction of energy flux in the field at any point is given by the wave vector. This can be derived through a solution to the wave equation for a given field. Another way to determine this vector is to perform a weighted sum of wave vectors from each individual transducer. If the transducer can be considered a point source, which occurs in most of the field for most mid-air haptic arrangements, the wave vector is in the direction of a line connecting the center of the transducer to the point of interest (such as a focus point). Alternatively, the magnitude and direction of wave vectors for each transducer can be calculated through a simulation or measurement. These vectors are weighted by the transducer emission amplitude during summation.

For a planar array with a relatively constant density of transducers and relatively even drive amplitude, a further simplification can be made by drawing a line from the geometric center of the array to the focus point. This will form the direction of the wave vector in that case.

A plane defined with the wave vector as its normal will contain pressure profiles important to this invention. A line drawn in this plane through the pressure peak defines an acoustic pressure amplitude versus distance cross-section. This cross-section can then define metrics such as 'size' through full-width-half-max (FWHM), length above a threshold value, or some other evaluation of this curve. For some fields, it can be converging along one cross section and diverging along another.

In an exemplary wave radiation schematic 100 in Figure 1, the center of desired consistent wave radiation is shown with a cross 105 and its circular extent is denoted by a dashed circle 115. Dotted lines 125a, 125b show the array aperture projected through the control point and their geometric relationship to the desired region. The focus specified is marked with a small dot 110 and the centerline through the focus is a dashed line 120. In this Figure 1, the small dot 110 generally occupies the same space as the cross 105. The transducers 150 are point sources in this example and are shown as solid semi-circular protrusions at the lower edge of each image. Specifically, Figure 1 shows focusing directly at a point in the center of a desired region often creates phase inversions and large variations in amplitude due to diffraction and the concentration of energy involved.

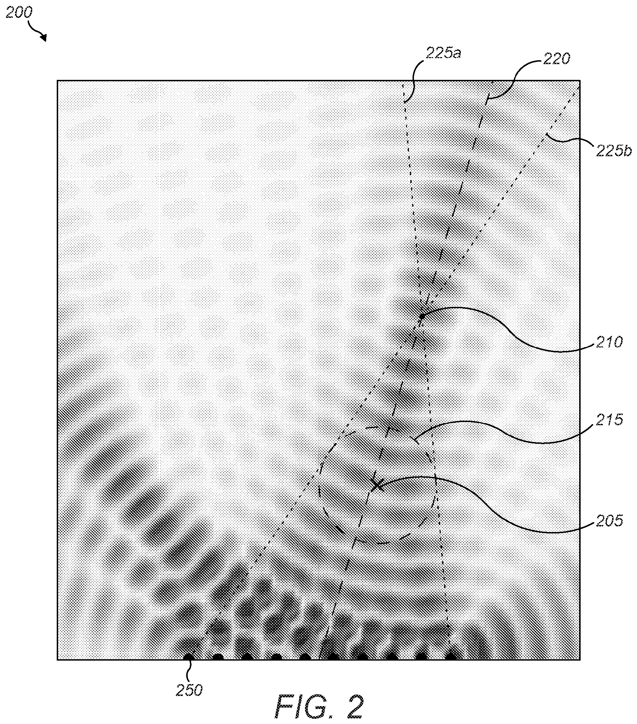

In an exemplary wave radiation schematic 200 in Figure 2, the center of desired consistent wave radiation is shown with a cross 205 and its circular extent is denoted by a dashed circle 215. Dotted lines 225a, 225b show the array aperture projected through the control point and their geometric relationship to the desired region. The focus specified is marked with a small dot 210 and the centerline through the focus is a dashed line 220. The transducers 250 are point sources in this example and are shown as solid semi-circular protrusions at the lower edge of each image. Specifically, Figure 2 shows creating the region in the near field to encapsulate the large region.

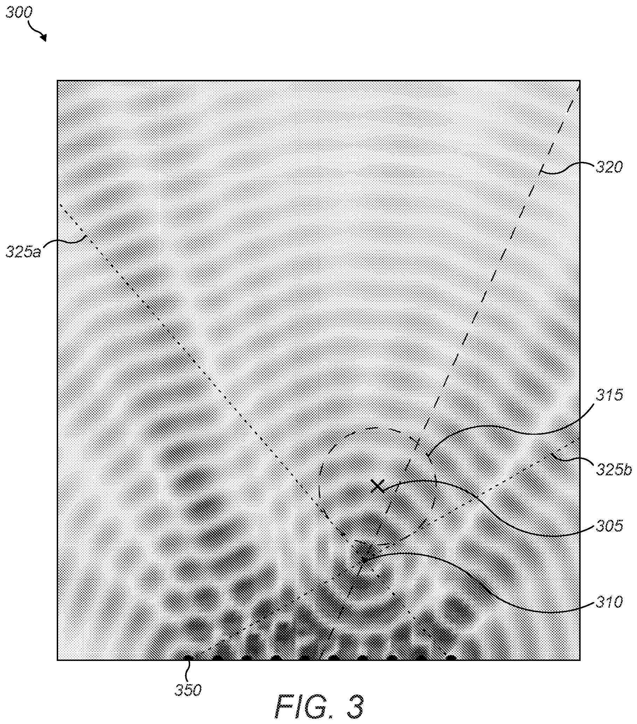

In an exemplary wave radiation schematic 300 in Figure 3, the center of desired consistent wave radiation is shown with a cross 305 and its circular extent is denoted by a dashed circle 315. Dotted lines 325a, 325b show the array aperture projected through the control point and their geometric relationship to the desired region. The focus specified is marked with a small dot 310 and the centerline through the focus is a dashed line 320. The transducers 350 are point sources in this example and are shown as solid semi-circular protrusions at the lower edge of each image. Specifically, Figure 3 shows creating the region in the far field to encapsulate the desired region.

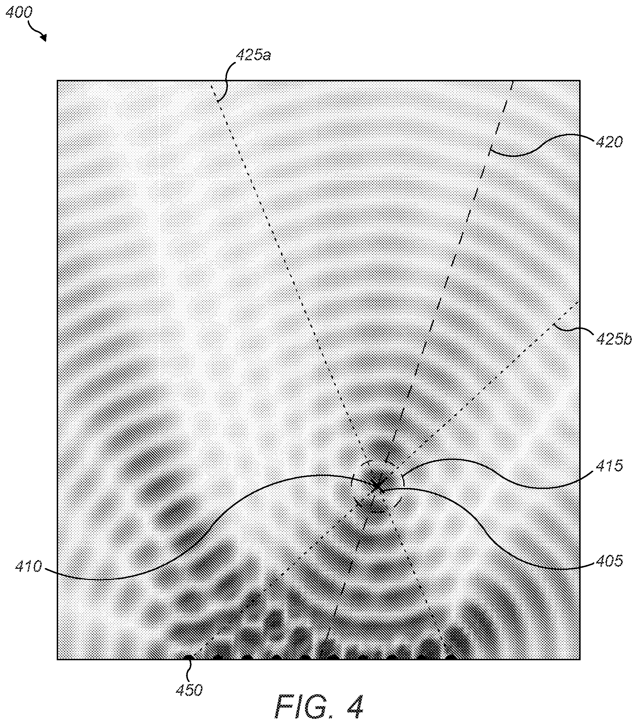

In an exemplary wave radiation schematic 400 in Figure 4, the center of desired consistent wave radiation is shown with a cross 405 and its circular extent is denoted by a dashed circle 415. Dotted lines 425a, 425b show the array aperture projected through the control point and their geometric relationship to the desired region. The focus specified is marked with a small dot 410 and the centerline through the focus is a dashed line 420. In this Figure 4, the small dot 410 generally occupies the same space as the cross 405. The transducers 450 are point sources in this example and are shown as solid semi-circular protrusions at the lower edge of each image. Specifically, Figure 4 shows a smaller region that may be used which drops sharply in amplitude towards the edges of the region.

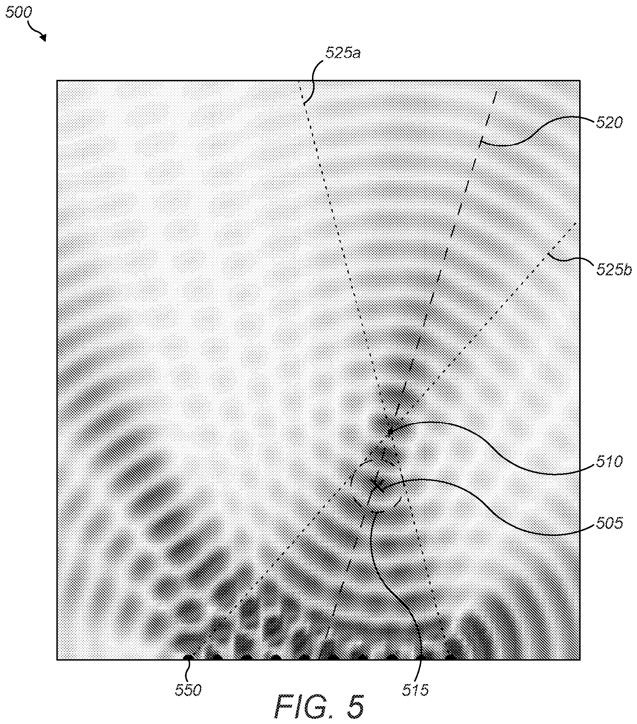

In an exemplary wave radiation schematic 500 in Figure 5, the center of desired consistent wave radiation is shown with a cross 505 and its circular extent is denoted by a dashed circle 515. Dotted lines 525a, 525b show the array aperture projected through the control point and their geometric relationship to the desired region. The focus specified is marked with a small dot 510 and the centerline through the focus is a dashed line 520. The transducers 550 are point sources in this example and are shown as solid semi-circular protrusions at the lower edge of each image. Specifically, Figure 5 shows for small regions, the focusing is not changed enormously and can be smoothly modified over time if a region grows or shrinks contiguously.

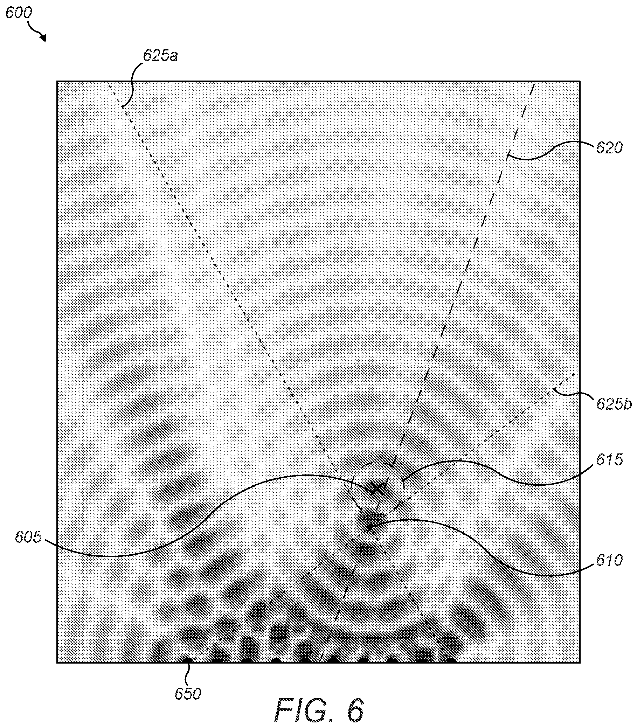

In an exemplary wave radiation schematic 600 in Figure 6, the center of desired consistent wave radiation is shown with a cross 605 and its circular extent is denoted by a dashed circle 615. Dotted lines 625a, 625b show the array aperture projected through the control point and their geometric relationship to the desired region. The focus specified is marked with a small dot 610 and the centerline through the focus is a dashed line 620. The transducers 650 are point sources in this example and are shown as solid semi-circular protrusions at the lower edge of each image. Specifically, Figure 6 shows a smaller far-field facing region that is less disperse.

Figures 1 and 4 show that, in some applications, focusing a distribution of sound energy may provide insufficient spatial coverage of the desired regions.

In one arrangement of this disclosure, predicting the size of away from the focus is done by drawing an imaginary boundary through the edges of the transducer array, converging through the focus point. The volume generated may then be sectioned into various frusta. While each may be used to contain a volume through which acoustic energy flux is propagated, the requirement is for a suitable focusing position to be calculated given an uncertainty or interaction volume, which inverts the problem.

To achieve this then a series of abstract planes must be constructed which bound both the emitting transducer array and the volume of uncertainty or volume through which energy flux is to be conducted. By then equating defining equations for the properties of these geometric objects (the planes and the volume of the region of interaction) the position of the focus that generates a volume of projection that encapsulates the interaction or uncertainty volume can be created. For simplicity, a possible description of a region or uncertainty could be a sphere in three-dimensions or a circle in two-dimensions, although any geometric description of a region is permissible.

There are also two choices, a near-field side volume, where the focus is further from the array than the volume target and a far-field side volume, where the focus is closer to the array than the volume target. For illustrative purposes and without loss of generality, the following algebra describes a two-dimensional example wherein planes are replaced by lines and the potentially spherically shaped volume by the area of a circle and assumes that the system has been transformed such that the volume in front of the array progresses away from the transducer in increments of positive x. Three-dimensional cases may be reduced to this by taking cross sections of a system and transforming into this coordinate system. Given this transformation, the line solutions may be classified in terms of how fast they increase in x and this used to determine the near-field side and far-field side solutions.

In the two-dimensional case, there are two lines with parametric equations which bound the transducer array and the projected focusing volume:

$$x = t_{1,x} + \lambda_1(1),$$

$$y = t_{1,y} + \lambda_1(d_{1,y}),$$

and

$$x = t_{n,x} + \lambda_2(1),$$

$$y = t_{n,y} + \lambda_2(d_{2,y}),$$

as the gradient in x because it can be freely chosen to scale the system since it must increase.

The equation for a circle and thus the circular region that is described is:

$$(x - x_o)^2 + (y - y_o)^2 = r^2,$$

Substituting the first line yields:

$$\left(t_{1,x} + \lambda_1(1) - x_o\right)^2 + \left(t_{1,y} + \lambda_1(d_{1,y}) - y_o\right)^2 = r^2,$$

$$t_{1,x}{}^2 - 2t_{1,x}x_o + x_o{}^2 + \lambda_1{}^2 + 2\lambda_1\left(t_{1,x} - x_o\right) +$$

$$t_{1,y}{}^2 - 2t_{1,y}y_o + y_o{}^2 + \left(\lambda_1 d_{1,y}\right)^2 + 2\lambda_1 d_{1,y}\left(t_{1,y} - y_o\right) - r^2 = 0.$$

Needing to solve for $\lambda_1$ initially the quadratic formula is for the roots $p_\pm$:

$$p_\pm = \frac{-b \pm \sqrt{b^2 - 4ac}}{2a},$$

Where in this case:

$$a = 1 + d_{1,y}{}^2,$$

$$b = 2\left(d_{1,y}\left(t_{1,y} - y_o\right) + t_{1,x} - x_o\right),$$

$$c = t_{1,y}{}^2 - 2t_{1,y}y_o + y_o{}^2 - r^2,$$

For any given gradient there must be one solution when the line intersection is a tangent, so the discriminant of the quadratic solution for $\lambda_1$ must be zero, yielding:

$$b^2 - 4ac = 0,$$

$$4\big(d_{1,y}(t_{1,y} - y_o) + t_{1,x} - x_o\big)^2 - 4\big(1 + d_{1,y}{}^2\big)\big(t_{1,y}{}^2 - 2t_{1,y}y_o + y_o{}^2 - r^2\big) = 0,$$

which is again a quadratic in $d_{1,y}$ the gradient of the line required. As the quadratic roots produced by the formula have the two choices of adding or subtracting a necessarily positive square root, and it is known that the far-field side solution involves a more positive $d_{1,y}$ (that divides more the gradient factor $1/d_{1,y}$), then it can be seen that the addition of the square root must describe the far-field side solution and the subtraction the near-field side solution.

By pursuing the same methodology for $t_{n,x}$ and $\lambda_2$ solutions for the other line may be found. By matching near- and far-field side solutions (where both lines either use the positive or negative square root discriminant solutions) for each, the position of the control point for each solution may be found as the intersection of the two lines in each of the two cases as shown in Figures 2 and 5 for the near field side solutions and Figures 3 and 6 for the far field side solutions.

An alternative approach to finding cross-sections may also be used for the three-dimensional case. By taking the equation of a plane as:

$$x = t_{1,x} + \mu_1\big(t_{1,x} - t_{n,x}\big) + \mu_2 d_{1,x},$$

$$y = t_{1,y} + \mu_1\big(t_{1,y} - t_{n,y}\big) + \mu_2 d_{1,y},$$

$$z = t_{1,z} + \mu_1\big(t_{1,z} - t_{n,z}\big) + \mu_2 d_{1,z},$$

and using the constraint that the directions modulated by $\mu_1$ and $\mu_2$ are perpendicular, that is:

$$d_{1,x}\big(t_{1,x} - t_{n,x}\big) + d_{1,y}\big(t_{1,y} - t_{n,y}\big) + d_{1,z}\big(t_{1,z} - t_{n,z}\big) = 0,$$

and having transformed the system such that the focusing and region always occurs at positive $x$ means that $d_{1,x}$ may be set to unity. Taking the equation of a sphere:

$$(x - x_o)^2 + (y - y_o)^2 + (z - z_o)^2 = r^2,$$

substituting the plane equations into this and finding the tangent solutions by setting the discriminant when considering the quadratics in $\mu_1$ and $\mu_2$ to zero yields more constraint equations. The three-dimensional case may then be solved similarly to the two-dimensional case, only that here three planes must be used to derive the final control point position.

Offset focusing may be changed depending on a smoothly evolving size or shape of the region required. In the case that this is due to uncertainty in location, this may reflect changing knowledge about probable error. This ensures that the smoothness of the element is preserved over time scales that could otherwise cause pops and clicks in the output.

This algorithm may also be extended to multiple arrays, but the inverse image will contain some of the distributions of the array footprints as it will beyond the focus form an inverted image of the contributing arrays. This may be undesirable but might remain serviceable if the redistribution of wave power is small.

In another arrangement, a gaussian optics approximation can be used to estimate the cross-sectional area (waist) of the focused acoustic field and then offset the as necessary to achieve a similar effect to the above method.

In gaussian optics the waist of a focused beam is given by:

$$w(z) = w_0 \sqrt{1 + \left(\frac{z}{z_R}\right)^2}, \qquad (1)$$

where $w_0$ is the radius of the beam at the focus and:

$$z_R = \frac{\pi w_0^2}{\lambda},$$

is the so-called Rayleigh range and $\lambda$ is the wavelength of the sound frequency being utilized. In these equations, z is the range from the focus along the direction of the wave vector. The $w_0$ used in equation 1 can be measured at a variety of locations and then referenced within a lookup table or estimated using:

$$w_0 = \frac{\lambda}{\pi\theta},$$

where $\theta$ is the angle from the edge of the array to the focal point (in radians) relative to the wave vector direction. In this case of a predominately round array this will have a singular value. In the case of an irregularly shaped array (square, rectangular, elliptical, etc.) this value represents the waist along a plane formed by the focal point, the center of the array, and the edge point for which $\theta$ is derived. In practice, the effective radius along various planes could be individually evaluated and together used to find a solution or they could be combined to form a single combined radius at any particular point.

For this arrangement, after a desired focal radius at a given point relative to the array is selected, calculation of the focal point location proceeds as follows. First, a desired focus radius and location is selected from external factors (uncertainty, desired beam shape, etc.) Next, at least one $w_0$ is estimated at that location using pre-measured values or estimated using above equations. Next, equation 1 is solved for z for a desired $w(z)$. This will give the offset from the focus z along the wave vector direction. To achieve the desired focus radius the new focus location is selected by adjusting the focus location long this direction by the z-offset amount. The change can be positive (moving the focus past the previous focus location) or negative (moving the focus ahead of the previous focus location). The choice of which direction to take is chosen by the user.

The above formulation applies when the z-offset derived is comparable to $z_R$. If the desired focus radius is significantly larger than $w_0$, z-offset will be large and then the optic approximation becomes less and less reliable. In that case, iterative solving can refine the solution. This involves first solving for the z-offset as above and deriving a new focus location. Next $w_0$ is evaluated at the new focus location using previous discussed methods and using equation 1, a focus radius can be determined at original focus point. If this evaluation of the focus radius is close enough to the desired solution (as specified by the user) then the algorithm is finished. If not, a new z-offset can be calculated using equation 1 and the new $w_0$. The new z-offset represents a refined offset from the original focus point. This new offset can be evaluated for accuracy with yet another $w_0$ (based upon the refined location), and so on. This guess-and-check iterative approach can converge on a solution.

The gaussian optic approximation uses a small-angle approximation and becomes less accurate as $\theta$ becomes large. Therefore, $\theta$ could serve as an evaluation parameter to select between different methods for offset calculation.

III. CONCLUSION

While the foregoing descriptions disclose specific values, any other specific values may be used to achieve similar results. Further, the various features of the foregoing embodiments may be selected and combined to produce numerous variations of improved haptic systems.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

Moreover, in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a", "has ...a", "includes ...a", "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art. The term "coupled" as used herein is defined as connected, although not necessarily directly and not necessarily mechanically. A device or structure that is "configured" in a certain way is configured in at least that way but may also be configured in ways that are not listed.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

## Claims

1.   A method comprising:

establishing a transducer array having a plurality of ultrasonic transducers with known relative positions and orientations;
defining a control field having a known spatial relationship relative to the transducer array;
defining a point of interest (105,205, 305, 405, 505, 605) in the control field;
defining a direction of energy flux at the point of interest as a wave vector;
calculating an acoustic pressure profile within the control field using a plane normal to the wave vector;
**characterized by**
defining a desired spatial size (115, 215, 315, 415, 515, 615) of an acoustic region around the point of interest (105,205, 305, 405, 505, 605) in the plane normal to the wave vector;
estimating a relationship between the desired spatial size (115, 215, 315, 415, 515, 615) of the acoustic region at the point of interest (105,205, 305, 405, 505, 605) and a focus location (110, 210, 310, 410, 510, 610) along a first line defined by a geometric center of the transducer array and proceeding into the control field along the wave vector;
determining the focus location (110, 210, 310, 410, 510, 610) using the relationship that provides the desired spatial size (115, 215, 315, 415, 515, 615) of the acoustic region around the point of interest (105,205, 305, 405, 505, 605);
driving the ultrasonic transducers to create a focus at the focus location (110, 210, 310, 410, 510, 610);
wherein the estimate of the relationship between the spatial size (115, 215, 315, 415, 515, 615) of the acoustic region at the point of interest (105,205, 305, 405, 505, 605) and the focus location (110, 210, 310, 410, 510, 610) along the first line defined by
the geometric center of the array includes generating a volume by determining a distance between a focus point of the control field and the geometric center of the transducer array using an imaginary boundary through an edge of the transducer array converging through the focus point;
wherein the focus location (110, 210, 310, 410, 510, 610) is offset from the point of interest (105,205, 305, 405, 505, 605).

2.   The method as in claim 1, wherein the wave vector is derived through a solution to a wave equation for the control field.

3.   The method as in claim 1, wherein the wave vector is derived through a weighted sum of wave vectors from the plurality of ultrasonic transducers.

4.   The method as in claim 1, wherein the wave vector is derived from the direction between a focus point of the control field and the geometric center of the transducer array.

5.   The method as in claim 1, wherein calculating the acoustic pressure profile includes generating a volume by determining the distance between a focus point of the control field and the geometric center of the transducer array using an imaginary boundary through edges of the transducer array converging through the focus point.

6.   The method as in claim 5, further comprising:
sectioning the volume into frusta.

**7.** The method as in claim 6, further comprising:
constructing a series of abstract planes that bound the transducer array and the volume.

**8.** The method as in claim 7, wherein the volume is a near-field side volume that is closer to the transducer array than the focus point of the control field.

**9.** The method as in claim 7, wherein the volume is a far-field side volume that is farther to the transducer array than the focus point of the control field.

**10.** The method as in claim 7, wherein the focus point of the control field is located within the volume.

**11.** The method as in claim 1 calculating the acoustic pressure profile includes a gaussian optics approximation.

**12.** The method as in claim 11, wherein the gaussian optics approximation uses offset focusing.


**Patentansprüche**

**1.** Verfahren, umfassend:

Errichten eines Wandlerarrays mit mehreren Ultraschallwandlern mit bekannten relativen Positionen und Ausrichtungen,
Definieren eines Kontrollfelds mit bekannter räumlicher Beziehung zum Wandlerarray,
Definieren eines Zielpunkts (105, 205, 305, 405, 505, 605) im Kontrollfeld,
Definieren einer Energieflussrichtung am Zielpunkt als Wellenvektor,
Berechnen eines Schalldruckprofils innerhalb des Kontrollfelds unter Verwendung einer Normalebene zum Wellenvektor,
**gekennzeichnet durch**
Definieren einer gewünschten räumlichen Größe (115, 215, 315, 415, 515, 615) eines akustischen Bereichs um den Zielpunkt (105, 205, 305, 405, 505, 605) in der Normalebene zum Wellenvektor,
Abschätzen einer Beziehung zwischen der gewünschten räumlichen Größe (115, 215, 315, 415, 515, 615) des akustischen Bereichs am Zielpunkt (105, 205, 305, 405, 505, 605) und einer Fokusposition (110, 210, 310, 410, 510, 610) entlang einer ersten Linie, die durch den geometrischen Mittelpunkt des Wandlerarrays definiert ist und entlang des Wellenvektors in das Kontrollfeld hinein verläuft,
Bestimmen der Fokusposition (110, 210, 310, 410, 510, 610) unter Verwendung der Beziehung, welche die gewünschte räumliche Größe (115, 215, 315, 415, 515, 615) des akustischen Bereichs um den Zielpunkt (105, 205, 305, 405, 505, 605) liefert,
Ansteuern der Ultraschallwandler zur Erzeugung eines Fokus an der Fokusposition (110, 210, 310, 410, 510, 610),
wobei die Schätzung der Beziehung zwischen der räumlichen Größe (115, 215, 315, 415, 515, 615) des akustischen Bereichs am Zielpunkt (105, 205, 305, 405, 505, 605) und der Fokusposition (110, 210, 310, 410, 510, 610) entlang der ersten, durch den geometrischen Mittelpunkt des Arrays definierten Linie die Erzeugung eines Volumens durch Bestimmung des Abstands zwischen einem Fokuspunkt des Kontrollfelds und dem geometrischen Mittelpunkt des Wandlerarrays unter Verwendung einer imaginären Grenze durch eine Kante des Wandlerarrays umfasst, die durch den Fokuspunkt zusammenlaufen,
wobei die Fokusposition (110, 210, 310, 410, 510, 610) vom Zielpunkt (105, 205, 305, 405, 505, 605) versetzt ist.

**2.** Verfahren nach Anspruch 1, wobei der Wellenvektor durch Lösung einer Wellengleichung für das Kontrollfeld abgeleitet wird.

**3.** Verfahren nach Anspruch 1, wobei der Wellenvektor durch eine gewichtete Summe der Wellenvektoren der Vielzahl von Ultraschallwandlern abgeleitet wird.

**4.** Verfahren nach Anspruch 1, wobei der Wellenvektor aus der Richtung zwischen einem Fokuspunkt des Kontrollfelds und dem geometrischen Mittelpunkt des Wandlerarrays abgeleitet wird.

**5.** Verfahren nach Anspruch 1, wobei die Berechnung des Schalldruckprofils die Erzeugung eines Volumens durch Bestimmung des Abstands zwischen einem Fokuspunkt des Kontrollfelds und dem geometrischen Mittelpunkt des Wandlerarrays unter Verwendung einer imaginären Grenze durch die Kanten des Wandlerarrays umfasst, die durch den Fokuspunkt zusammenlaufen.

**6.** Verfahren nach Anspruch 5, ferner umfassend:
Unterteilung des Volumens in Kegelstümpfe.

**7.** Verfahren nach Anspruch 6, ferner umfassend:
Konstruieren einer Reihe abstrakter Ebenen, die das Wandlerarray und das Volumen begrenzen.

**8.** Verfahren nach Anspruch 7, wobei das Volumen ein nahfeldseitiges Volumen ist, das näher am Wandlerarray liegt als der Fokuspunkt des Kontrollfelds.

**9.** Verfahren nach Anspruch 7, wobei das Volumen ein fernfeldseitiges Volumen ist, das weiter vom Wandlerarray entfernt liegt als der Fokuspunkt des Kontrollfelds.

**10.** Verfahren nach Anspruch 7, wobei sich der Fokuspunkt des Kontrollfelds innerhalb des Volumens befindet.

**11.** Verfahren nach Anspruch 1 wobei die Berechnung des Schalldruckprofils eine Gauß-Optik-Approximation umfasst.

**12.** Verfahren nach Anspruch 11, wobei die Gauß-Optik-Approximation eine versetzte Fokussierung verwendet.

**Revendications**

**1.** Procédé comprenant :

l'établissement d'un réseau de transducteurs ayant une pluralité de transducteurs ultrasonores avec des positions et des orientations relatives connues
la définition d'un champ de contrôle ayant une relation spatiale connue par rapport au réseau de transducteurs ;
la définition d'un point d'intérêt (105, 205, 305, 405, 505, 605) dans le champ de contrôle ;
la définition d'une direction de flux d'énergie au niveau du point d'intérêt sous forme d'un vecteur d'onde;
le calcul d'un profil de pression acoustique à l'intérieur du champ de contrôle à l'aide d'un plan perpendiculaire au vecteur d'onde ;
**caractérisé par**
la définition d'une taille spatiale souhaitée (115, 215, 315, 415, 515, 615) d'une région acoustique autour du point d'intérêt (105, 205, 305, 405, 505, 605) dans le plan perpendiculaire au vecteur d'onde ;
l'estimation d'une relation entre la taille spatiale souhaitée (115, 215, 315, 415, 515, 615) de la région acoustique au niveau du point d'intérêt (105, 205, 305, 405, 505, 605) et un emplacement de focalisation (110, 210, 310, 410, 510, 610) le long d'une première ligne définie par un centre géométrique du réseau de transducteurs et poursuivant dans le champ de contrôle le long du vecteur d'onde ;
la détermination de l'emplacement de focalisation (110, 210, 310, 410, 510, 610) à l'aide de la relation qui donne la taille spatiale souhaitée (115, 215, 315, 415, 515, 615) de la région acoustique autour du point d'intérêt (105, 205, 305, 405, 505, 605) ;
la commande des transducteurs ultrasonores pour créer un foyer au niveau de l'emplacement de focalisation (110, 210, 310, 410, 510, 610) ;
dans lequel l'estimation de la relation entre la taille spatiale (115, 215, 315, 415, 515, 615) de la région acoustique au niveau du point d'intérêt (105, 205, 305, 405, 505, 605) et l'emplacement de focalisation (110, 210, 310, 410, 510, 610) le long de la première ligne définie par le centre géométrique du réseau comprend la génération d'un volume en déterminant une distance entre un point de focalisation du champ de contrôle et le centre géométrique du réseau de transducteurs en utilisant une limite imaginaire à travers un bord du réseau de transducteurs convergeant à travers le point de focalisation;
dans lequel l'emplacement de focalisation (110, 210, 310, 410, 510, 610) est décalé par rapport au point d'intérêt (105, 205, 305, 405, 505, 605).

**2.** Le procédé selon la revendication 1, dans lequel le vecteur d'onde est dérivé à travers une solution à une équation d'onde pour le champ de contrôle.

**3.** Le procédé selon la revendication 1, dans lequel le vecteur d'onde est dérivé à travers une somme pondérée des

**EP 3 847 529 B1**

vecteurs d'onde provenant de la pluralité de transducteurs ultrasonores.

4. Le procédé selon la revendication 1, dans lequel le vecteur d'onde est dérivé de la direction entre un point de focalisation du champ de contrôle et le centre géométrique du réseau de transducteurs.

5. Le procédé selon la revendication 1, dans lequel le calcul du profil de pression acoustique comprend la génération d'un volume en déterminant la distance entre un point de focalisation du champ de contrôle et le centre géométrique du réseau de transducteurs à l'aide d'une limite imaginaire à travers les bords du réseau de transducteurs convergeant à travers le point de focalisation.

6. Le procédé selon la revendication 5, comprenant également :
la coupe du volume en tronçons.

7. Le procédé selon la revendication 6, comprenant également :
la construction d'une série de plans abstraits qui lient le réseau de transducteurs et le volume.

8. Le procédé selon la revendication 7, dans lequel le volume est un volume latéral en champ proche qui est plus proche du réseau de transducteurs que le point de focalisation du champ de contrôle.

9. Le procédé selon la revendication 7, dans lequel le volume est un volume latéral en champ lointain qui est plus éloigné du réseau de transducteurs que le point de focalisation du champ de contrôle.

10. Le procédé selon la revendication 7, dans lequel le point de focalisation du champ de contrôle est situé à l'intérieur du volume.

11. Le procédé selon la revendication 1, dans lequel le calcul du profil de pression acoustique comprend une approximation de l'optique gaussienne.

12. Le procédé selon la revendication 11, dans lequel l'approximation de l'optique gaussienne utilise une focalisation décalée.

12

**FIG. 1**

FIG. 2

FIG. 3

FIG. 4

FIG. 5

*FIG. 6*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62728830 B

**Non-patent literature cited in the description**

- **KAPPUS BRIAN et al.** Spatiotemporal Modulation for Mid-Air Haptic Feedback from an Ultrasonic Phased Array. *25th International Congress on Sound and Vibration 2018 (ICSV 25)*, 1669-1675